Europäisches Patentamt

European Patent Office

Office européen des brevets

(11) Veröffentlichungsnummer: **0 344 636**
**A2**

(12) **EUROPÄISCHE PATENTANMELDUNG**

(21) Anmeldenummer: **89109519.2**

(22) Anmeldetag: **26.05.89**

(51) Int. Cl.⁴: **B23K 7/04**

(30) Priorität: **31.05.88 DE 3818399**

(43) Veröffentlichungstag der Anmeldung:
**06.12.89 Patentblatt 89/49**

(84) Benannte Vertragsstaaten:
**AT FR GB IT SE**

(71) Anmelder: **Klöckner-Wilhelmsburger GmbH**
**Borsigstrasse 24**
**D-2054 Geesthacht(DE)**

(72) Erfinder: **Noll, Hans**
**Schlossberger Weg 1**
**D-4019 Monheim(DE)**

(74) Vertreter: **Kiefer, Winfried, Dipl.-Phys.**
**Klöckner-Werke Aktiengesellschaft**
**Patentabteilung Klöcknerstrasse 29**
**D-4100 Duisburg 1(DE)**

(54) Verfahren und Vorrichtung zum Bestimmen der Berührungslinie bzw. Durchdringungslinie zwischen einem Hauptkörper und mindestens einem Nebenkörper für das Brennschneiden.

㊄ Zum Bestimmen der Berührungslinie bzw. Durchdringungslinie zwischen einem Hauptkörper und mindestens einem Nebenkörper für das Brennschneiden, die sich berühren bzw. durchdringen, wird zunächst der Hauptkörper raumfest angeordnet und außerhalb des Hauptkörpers eine raumfeste Ebene festgelegt, in der ein Bezugspunkt für mindestens einen rotierenden Fahrstrahl gewählt wird. In Abhängigkeit des Drehwinkels des rotierenden Fahrstrahls wird die Länge der Lote auf einen die Berührungslinie enthaltenden, in sich geschlossenen Bereich des Hauptkörpers bestimmt und mit den Meßwerten die geometrische Gestalt des Körpers in dem in sich geschlossenen Bereich erfaßt und die Berührungslinie bzw. Durchdringungslinie in Abhängigkeit der Abmessungen des Nebenkörpers errechnet.

EP 0 344 636 A2

## Verfahren und Vorrichtung zum Bestimmen der Berührungslinie bzw. Durchdringungslinie zwischen einem Hauptkörper und mindestens einem Nebenkörper

Die Erfindung betrifft ein Verfahren zum Bestimmen der Berührungslinie bzw. Durchdringungslinie zwischen einem Hauptkörper und mindestens einem Nebenkörper für das Brennschneiden, wobei der Hauptkörper und der Nebenkörper sich berühren bzw. durchdringen, sowie Vorrichtungen zum Durchführen des Verfahrens.

Unter einem Hauptkörper wird im allgemeinen derjenige Körper verstanden, der einen größeren Durchmesser als der andere Körper, der als Nebenkörper bezeichnet wird, hat. Diese Bezeichnungen werden im folgenden beibehalten, obgleich es im Rahmen der Erfindung unwesentlich ist, welcher der Körper den größeren Durchmesser hat.

Unter einem Hauptkörper ist weiterhin zu verstehen, an den der (die) andere(n) (Nebenkörper) angeschweißt werden.

Im Rahmen der Erfindung sind unter Körpern Reaktorbehälter, die Deckel für Reaktorbehälter, weiterhin Kessel, Klöpperböden, Rohre für Erdgasleitungen und Rohre, Rohrknoten für Gerüste von Bohrinseln zu verstehen, wobei im allgemeinen diese Körper mit anderen Körpern wie Rohren, Rohrstutzen und dgl. entlang ihrer Berührungslinie verschweißt werden.

Vor dem Schweißen müssen der Nebenkörper und der Hauptkörper aneinander angepaßt werden, damit sie sich berühren bzw. durchdringen und die Schweißnaht gelegt (gezogen) werden kann.

Bisher ist man beim Brennschneiden der Berührungslinien von mathematischen Körpern (DBP 31 50 971) ausgegangen, d.h. man hat zum Beispiel generell bei Rohren einen Kreisquerschnitt vorausgesetzt. Dies hatte im allgemeinen ein erhebliches Nacharbeiten zur Folge, um der Tatsache Rechnung zu tragen, daß in der Praxis Rohre auch nicht in erster Näherung einen runden Querschnitt aufweisen. So fordern beispielsweise die einschlägigen Normen nur, daß die Rohre nach Augenmaß gerade sein müssen, d.h., daß implizit weitstreuenden Fertigungstoleranzen von Rohren von vornherein Rechnung getragen wird und weiterhin auch der Tatsache, daß es bislang keine reproduzierbaren Meßverfahren gibt, um diesen in der Praxis auftretenden Abweichungen von der idealen Geometrie genau Rechnung zu tragen.

Entsprechendes gilt für große Behälter usw.

Der Erfindung liegt deshalb die Aufgabe zugrunde, ein Verfahren der eingangs erwähnten Art zu schaffen, das mit beliebiger Genauigkeit die Berührungslinie bzw. Durchdringungslinie von einem Hauptkörper mit mindestens einem Nebenkörper zu bestimmen gestattet, so daß nach dem Brennschneiden ein Nacharbeiten nicht mehr erforderlich ist.

Diese Aufgabe wird erfindungsgemäß dadurch gelöst, daß der Hauptkörper raumfest angeordnet wird, außerhalb des Hauptkörpers eine raumfeste Ebene festgelegt und in der raumfesten Ebene ein Bezugspunkt für mindestens einen rotierenden Fahrstrahl gewählt wird, in Abhängigkeit des Drehwinkels des rotierenden Fahrstrahls die Länge der Lote auf einen die Berührungslinie enthaltenden in sich geschlossenen Bereich des Hauptkörpers bestimmt werden, mit den Meßwerten die geometrische Gestalt des Körpers in dem in sich geschlossenen Bereich erfaßt und die Berührungslinie bzw. Durchdringungslinie in Abhängigkeit der Abmessungen des Nebenkörpers errechnet wird.

In völliger Abkehr zum bisherigen Stand der Technik wird von vornherein darauf verzichtet, zur Bestimmung der Berührungslinie von Körpern mit Zylindersymmetrie, Kugelsymmetrie, Kegelsymmetrie usw. auszugehen, vielmehr wird in dem Bereich, in dem die Berührungslinie bzw. Durchdringungslinie verläuft, der Hauptkörper mit allen Unregelmäßigkeiten hinreichend ge nau nachgebildet und dann entsprechend die Berührungslinie bzw. Durchdringungslinie in Abhängigkeit der Abmessungen des Nebenkörpers errechnet.

Falls für die Praxis zum Beispiel für ein Rohr als Nebenrohr der Querschnitt als Kreisquerschnitt angesetzt werden kann, wird mit einem Rohr von entsprechendem Radius und entsprechender Wanddicke die Berührungslinie bzw. Durchdringungslinie errechnet. Entsprechend kann auch ein Nebenrohr gegebenenfalls approximiert werden durch ein Nebenrohr mit elliptischem Querschnitt, falls dies die Praxis zuläßt. Im allgemeinsten Fall kann unter diesen Voraussetzungen eine Approximation mit einem prismatischen Körper vorgenommen werden, dessen Querschnitt durch zwei in sich geschlossene Polygonzüge gegeben ist, deren jeweilige gegenseitige Abstände die jeweilige Wanddicke repräsentieren (im Fall des hohlen prismatischen Körpers).

In den Fällen, in denen für die Praxis ein Nebenkörper in der oben beschriebenen Weise mathematisch nicht approximiert werden kann, werden in einer weiteren Ausgestaltung der Erfindung die Abmessungen des Nebenkörpers im Bereich der Berührungslinie von einer raumfesten Rotationsfläche aus gemessen, indem die Abstände der Meßstrahlen auf dem Nebenkörper bestimmt werden, die durch die Achse der Rotationsfläche geht.

Durch diese Maßnahmen wird erreicht, daß auch bei größten Unregelmäßigkeiten, z.B. lokalen Deformationen (z.B. Ausbeulungen) und Krümmungen ein Nachbessern nach dem Brennschneiden nicht mehr erforderlich ist.

Gemäß einem bevorzugten Ausführungsbeispiel wird in der Weise gemessen, daß die Drehachse der Rotationsfläche die Achse des Nebenkörpers unter dem Winkel schneidet, unter dem sich die Achsen des Haupt- und Nebenkörpers schneiden.

Durch diese Maßnahme wird die Berührungslinie bzw. Durchdringungslinie unmittelbar erfaßt.

In einer weiteren Ausgestaltung der Erfindung werden die Abmessungen des Hauptkörpers und/oder des Nebenkörpers von ei ner raumfesten Ebene aus in der Weise gemessen, daß die Meßwerte mit einer in radialer Richtung auf dem Fahrstrahl verschiebbar angeordneten Meßzelle berührungslos aufgenommen werden. Unter Berührung arbeitende Meßzellen sind z.B. Einrichtungen zu verstehen, deren reflektierte Laserimpulse bzw. reflektierte Schallimpulse ein Maß für die Abstände der Meßzelle von dem Körper sind.

Es kann anstelle dieser Meßzelle ein mechanischer Taster eingesetzt werden, dessen Bewegungen in Achsenrichtung von einem Drehgeber als Impulsgeber in Signale umgesetzt werden.

In einer weiteren Ausgestaltung der Erfindung werden beim Bestimmen der Abmessungen des Nebenkörpers von einr Rotationsfläche aus mit einer auf der Mantellinie der Rotationsfläche verschiebbaren Meßzelle berührungslos bzw. mit einem mechanischen Taster die Abstände aufgenommen und aus diesen Abständen die Kontur des Körpers durch Differenzbildung bestimmt.

Es zeigte sich, daß es aufgrund dieser Maßnahmen nicht mehr erforderlich ist, nach dem Brennschneiden der Berührungslinie bzw. Durchdringungslinie ein Nacharbeiten vorzunehmen, damit eine den Qualitätsanforderungen entsprechende Schweißnaht gelegt wird. Es zeigte sich darüber hinaus, daß das erfindungsgemäße Verfahren es ohne weiteres ermöglicht, die Berührungslinie bzw. Durchdringungslinie so genau zu bestimmen, daß die Querschnitte der Schweißnaht innerhalb einer vorgegebenen Toleranz liegen, was bisher nicht möglich war.

Die Vorrichtung zur Durchführung des Verfahrens ist erfindungsgemäß dadurch gekennzeichnet, daß sie eine Aufnahme für die raumfeste Lagerung des Hauptkörpers bzw. des Nebenkörpers, zur Festlegung der raumfesten Bezugsebene bzw. Rotationsfläche ein Kreuzsupport und eine in der Ebene des arretierbaren Kreuzsupportes um eine vorgegebene Achse auf einem drehbaren Arm angeordnete Meßzelle bzw. einen mechanischen Taster aufweist. Durch die raumfeste Lagerung wird erreicht, daß die gegenseitige des Hauptkörpers und des Nebenkörpers zueinander festgelegt werden können (erfindungswesentlich).

Die Erfindung ist in der Zeichnung anhand von Ausführungsbeispielen erläutert. Es zeigen:

Fig. 1 im Schnitt ein in ein abgewinkeltes Blech (Hauptkörper) eingesetzes Rohr von elliptischem Querschnitt (Nebenkörper)

Fig. 2 einen Schnitt gemäß II-II in Figur 1,

Fig. 3 die Bestimmung des Pendelpunktes,

Fig. 3a,b ein auf ein Hauptrohr aufgesetztes Nebenrohr in Seitenansicht bzw. einen Schnitt gemäß IIIb-IIIb in Figur 3a,

Fig.4a,b,c ein in ein Hauptrohr eingesetztes Nebenrohr im Schnitt bzw. einen Schnitt gemäß IVb-IVb in Figur 4a,

Fig. 5 eine Vorrichtung zum Durchführen des Verfahrens für den Hauptkörper und

Fig. 6 eine Vorrichtung zum Durchführen des Verfahrens für den Nebenkörper

Das Verfahren ist im folgenden anhand von Ausführungsbeispielen für die Durchdringungslinie bzw. Berührungslinie erläutert. Die Ausführungen zur Bestimmung der Durchdringungslinie gelten entsprechend für die Bestimmung der Berührungslinie bzw. umgekehrt.

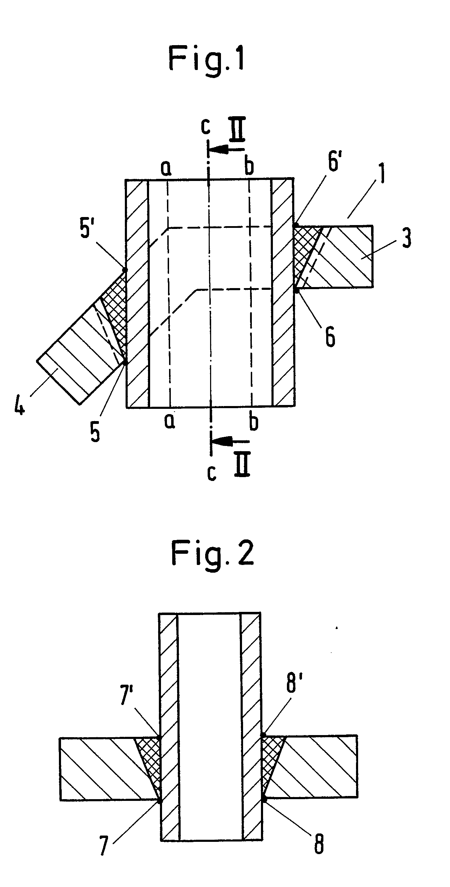

In Figur 1 ist im Schnitt eine abgewinkelte Platte 1 als Hauptkörper im Ausschnitt dargestellt, in deren Kantenbereich ein Rohr 2 von elliptischem Querschnitt eingesetzt ist.

Die beiden Achsen a-a und b-b des Rohres, die durch die Brennpunkte der durch die Querschnittsfläche gegebenen Ellipse verlaufen, sind strichliert dargestellt, während die Achse c-c, die durch den Schnittpunkt der großen Achsen und der kleinen Achsen gegeben ist, strichpunktiert dargestellt ist.

Die Achsen verlaufen senkrecht zum Schenkel 3 der Platte, deren anderer Schenkel mit 4 bezeichnet ist.

Mit 5 und 6 sind die Durchstoßpunkte der eine Raumkurve bildenden Durchdringungslinie durch die Zeichenebene bezeichnet.

Die Durchdringungslinie stimmt mit dem geometrischen Ort für den Pendelpunkt eines nicht dargestellten Schneidbrenners überein, der zum Schneiden der Durchdringungslinie zum Einsatz kommt.

Die Figur 2 zeigt einen Schnitt gemäß II-II in Figur 1. Mit 7 und 8 sind die um 180° versetzten Durchstoßpunkte der Durchdringungslinie durch die Zeichenebene bezeichnet, wobei die in Figur 1 dargestellten Achsen des elliptischen Rohres zusammenfallen und gemeinsam mit der doppelstrich-punktierten Linie dargestellt sind.

In den beiden Figuren 1 und 2 sind die jeweiligen Querschnitte der Schweißfugen schraffiert eingezeichnet (beim Schweißen ist ggf. noch der Schweißspalt zwischen den beiden Körpern im Bereich der zu ziehenden Schweißwurzel zu berücksichtigen).

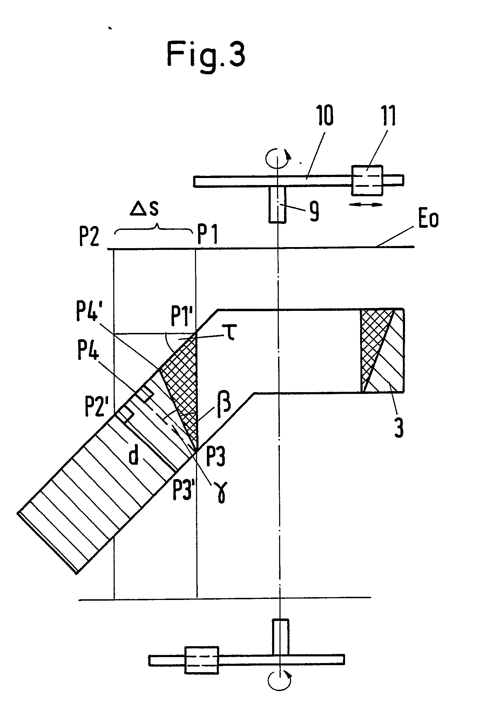

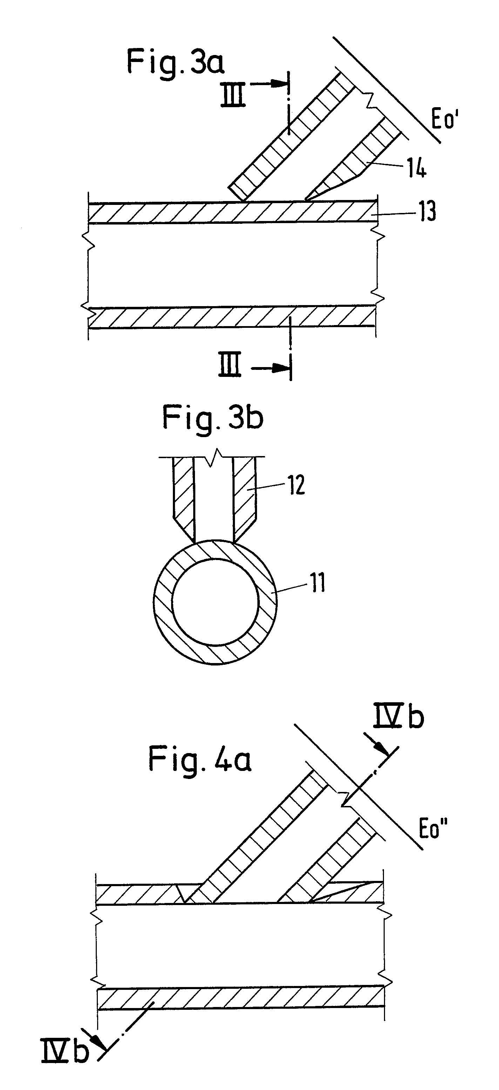

Die Figur 3 erläutert in der Darstellung der Figur 1 das Verfahren für den Hauptkörper (der Nebenkörper ist der Übersichtlichkeit halber nicht dargestellt).

Mit E ist eine raumfeste Bezugsebene oberhalb des Hauptkörpers bezeichnet, die parallel zum Schenkel 3 verläuft und deren nicht dargestellte Flächennormale parallel zu den nicht dargestellten Achsen des elliptischen Rohres (ebenfalls nicht dargestellt) gerichtet ist.

Um die zur Ebene E. senkrechte Drehachse 9 wird ein Arm 10 um 360° gedreht. Auf diesem Arm ist ein Taster 11 verschiebbar angeordnet.

Der Taster ist z.B. eine nach dem Laserprinzip arbeitende Baueinheit aus einem Sender und Empfänger bzw. eine Funktionseinheit mit einer Induktionsspule, in der ein auf der Oberfläche des Hauptkörpers geführter Taststift abrollt und dessen Auslenkungen in axialer Richtung die geometrische Gestalt des Hauptkörpers repräsentieren.

Der Taster wird in der Ebene E. auf einer ersten geschlossenen Bahn geführt, die der Schnittlinie des Außenmantels des Nebenrohres in der Ebene E. entspricht.

Von dieser geschlossenen ersten Kurve aus wird die Länge der Lote auf den Hauptkörper bestimmt. Diese gemessenen Werte werden gespeichert. Es ist ohne weiteres ersichtlich, daß die in der Praxis auftretenden Abweichungen des Außendurchmessers von einer Kreisgeometrie ohne weiteres durch diese Kurve erfaßt werden.

So werden beispielsweise in den Figuren 1 und 2 die Abstände der Punkt 5' und 6' bzw. 7' und 8' von der Ebene E. aus bestimmt, aus denen sich ohne weiteres ergibt, daß der Hauptkörper ein abgewinkeltes Blech ist.

Anschließend wird eine in sich geschlossene zweite Kurve mit dem Taster abgefahren, die koaxial zu der ersten Kurve verläuft, wobei die einander zugeordneten Punkte auf der ersten geschlossenen Kurve zu der zweiten geschlossenen Kurve einen fest vorgegebenen Abstand aufweisen, der in der Zeichnung mit $\Delta$ s bezeichnet ist.

Der Fußpunkt des Lotes vom Punkt P1 auf den Hauptkörper sei mit P1', der Fußpunkt des Lotes von Punkt P2 aus mit P2' bezeichnet.

Fig. 3 dient zur Erläuterung der elementargeometrischen Beziehungen zur Bestimmung des Pendelpunktes.

Im Punkt P2 wird zum Inneren des Hauptkörpers die Senkrechte auf die Außenfläche errichtet, deren Schnitt mit der Innenfläche den Schnittpunkt P3' ergibt. Die Verlängerung des Lotes von P1 über P1' ergibt als Schnittpunkt mit der Innenwandung des Hauptkörpers den Punkt P3.

Die durch die Punkte P2' und P3' verlaufende Gerade wird parallel so verschoben, daß sie durch P3 verläuft, wobei sich der Schnittpunkt P4 mit der Außenfläche ergibt. Aufgrund elementargeometrischer Beziehungen (Cosinussatz) ergibt sich die Strecke P1'P3 , wobei P3 der Pendelpunkt des nicht eingezeichneten Schneidbrenners ist. Die schraffierte Fläche ist der Querschnitt der Schweißfuge in der Zeichenebene. Aus den Winkeln $\tau$, $\gamma$, $\beta$ sowie $\Delta$ s und d ergeben sich die Beziehungen.

In der Praxis kann allgemein davon ausgegangen werden, daß in erster Näherung die Dicke des Hauptkörpers konstant ist. Sie ist im vorliegenden Fall mit d bezeichnet und ohne weiteres z.B. aus Dickenmessungen bekannt.

In der Zeichnung ist die Länge der Senkrechten vom Punkt P2' aus mit dem Schnittpunkt P3' mit d bezeichnet. (Sie ist identisch mit der Dicke d). Entsprechend werden die in den Figuren 1 und 2 mit 6, 7 und 8 bezeichneten Pendelpunkte bestimmt, entsprechendes gilt auch für sämtliche durch eine Raumkurve gegebenen Pendelpunkte, in dem diese Berechnungen durch eine hinreichend große Anzahl von Schnitten durchgeführt wird, deren Ebene mit der Schwenkachse 9 zusammenfällt.

In den Figuren 1 und 2 ist kreuzschraffiert die Schweißfuge dargestellt. Es ist ohne weiteres ersichtlich, daß aufgrund elementargeometrischer Beziehungen, nachdem eine hinreichend große Anzahl von Pendelpunkten bestimmt wurde, die Schweißfuge ohne weiteres errechnet wird. Anschließend wird beim Trennschneiden der Brenner so geführt, daß seine verlängerte Achse durch die Pendelpunkte verläuft und zusätzlich zu der Schwenkachse der Winkel $\tau$ eingehalten ist.

Es ist ohne weiteres ersichtlich, daß außerhalb des bandförmigen Bereiches, der einerseits durch die Schnittlinie des äußeren Umfangs und den um die Breite d (bezogen auf die Bezugsebene) verlaufenden bandförmigen Bereich die geometrische Gestalt des Hauptkörpers unbeachtlich ist.

Zur Erläuterung des Sachverhaltes für die Berührungslinie wird ergänzend auf die Figuren 3a, 3b verwiesen, die in Seitenansicht ein auf ein Hauptrohr aufgesetztes Nebenrohr bzw. einen Schnitt gemäß III-III in Figur 3a zeigen. Das Hauptrohr ist mit 11 und das Nebenrohr mit 12 bezeichnet.

Die raumfeste Bezugsebene ist mit E°° bezeichnet, ihre Flächennormale verläuft parallel zur strichpunktiert dargestellten Achse des Nebenrohres, mit der zur Vereinfachung die Drehachse für den nicht dargestellten Schwenkarm (vgl. Figur 3) zusammenfällt.

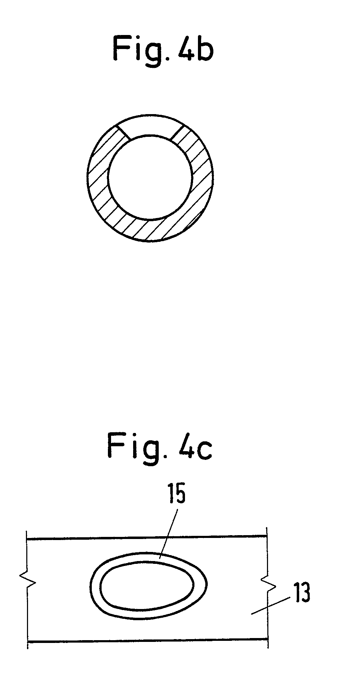

Die aus den Figuren 4a und 4b ersichtliche Schweißfuge wird nach Festlegung der Raumkurve für die Pendelpunkte ebenfalls anhand elementargeometrischer Berechnungen festgelegt.

Die Figuren 4a, b, c zeigen ein in ein Hauptrohr eingesetztes Nebenrohr in einem durch die beiden sich schneidenden Achsen des Haupt- und Nebenrohres gelegten Ebene, weiterhin einen Schnitt gemäß IVb-IVb in Figur 4a, sowie weiterhin eine Draufsicht auf das Hauptrohr mit der geschnittenen Durchdringungslinie.

Das Hauptrohr ist jeweils mit 13 und das Nebenrohr mit 14 bezeichnet, soweit es dargestellt ist.

In Figur 4c ist die bandförmig verlaufende Durchdringungslinie nach dem Brennschneiden, unter Berücksichtigung des Schweißspaltes mit 15 bzeichnet.

Die mit $E^{\bullet \prime\prime}$ bezeichnete raumfeste Bezugsebene ist in der Figur 4a eingezeichnet, ihre Flächennormale verläuft in Richtung der strichpunktiert dargestellten Achse des Nebenrohres.

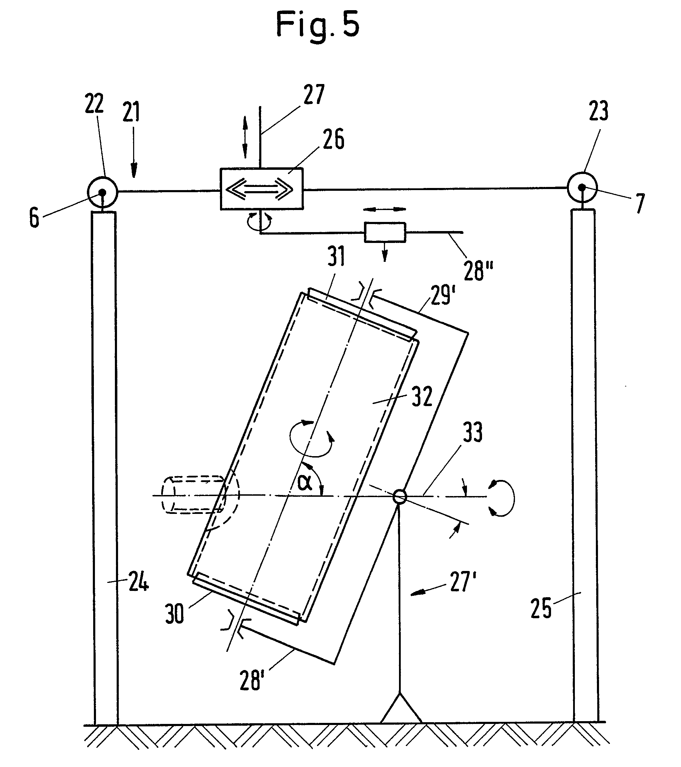

Figur 5 zeigt eine Vorrichtung zum Durchführen des Verfahrens für den Hauptkörper bzw. Nebenkörper. Die Vorrichtung weist zur Festlegung der ortsfesten Ebene E ein Kreuzsupport 21 auf, das senkrecht zur Zeichenebene auf zwei Schienen 22 und 23 verfahrbar ist. Die Schienen 6 und 7 sind auf einem Gerüst angeordnet von dem lediglich die vorderen lotrechten Pfosten 24 und 25 sichtbar sind, während die beiden hinteren Pfosten verdeckt sind. In dem Support ist in dessen Ebene ein Schlit ten 26 in Richtung des Doppelpfeiles zwangsgeführt. Der Schlitten weist eine lotrechte Welle 27 mit einem in radialer Richtung zeigenden Arm 28 auf, auf dem eine Vorrichtung $28^{\prime\prime}$ zum Erfassen der geometrischen Konfiguration des Hauptkörpers im Bereich der Durchdringungslinie angeordnet ist.

Innerhalb des Portalrahmens ist die Dreh- und Kippeinrichtung $27^{\prime}$ angeordnet, die an sich bekannt ist.

Der Tisch der Dreh- und Kippeinrichtung weist zwei Schwingen $28^{\prime}$ und $29^{\prime}$ auf, in der mittels der beiden Klemmbacken 30 und 31 im vorliegenden Fall das Hauptrohr 32 eingespannt ist, und um seine Achse verdrehbar in vorgegebenen Winkellagen arretiert werden kann. Die Dreh- und Kippeinrichtung ist um ihre Achse 33 und andererseits senkrecht um diese Achse 33 verschwenkbar. Falls die Achse des Hauptrohres und die Achse des Nebenrohres einen Winkel α einschließen, wird die Dreh- und Kippeinrichtung so verschwenkt, daß die Achse des Hauptrohres mit der Horizontalen den Winkel α einschließt.

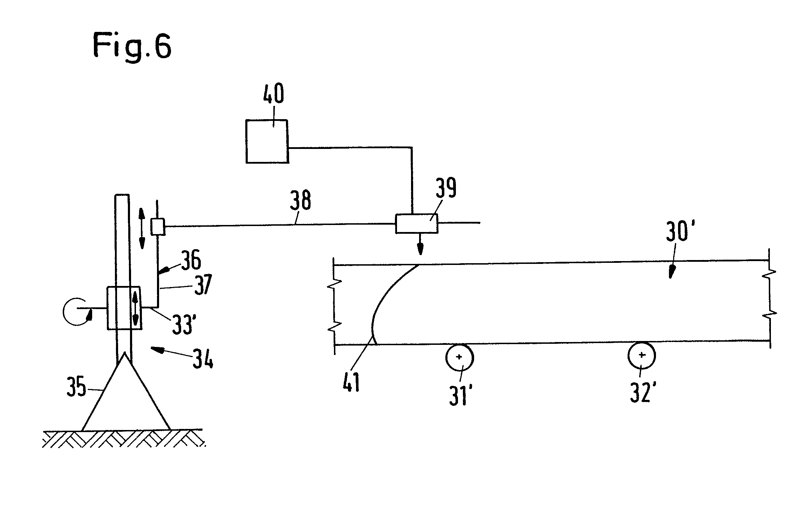

Figur 6 zeigt das Ausführungsbeispiel einer Vorrichtung zum Durchführen des Verfahrens für den Nebenkörper.

Das Nebenrohr ist in Figur 6 mit 30 bezeichnet und ist auf den Rollen $31^{\prime}$ und $32^{\prime}$ derart gelagert, daß seine strichliert eingezeichnete Achse mit der Achse 33 einer Vorrichtung 34 fluchtet, die zur Bestimmung der Oberflächengeometrie des Nebenrohres dient. Diese Vorrichtung 34 weist einen Ständer 35 auf, auf der um 360° verschwenkbar ein L-Profil 36 mit seinem Schenkel 37 gelagert ist, dessen anderer Schenkel 38 parallel und mit Abstand zur Achse des Nebenrohres verläuft. Im Schenkel 38 ist verschiebbar die Meßeinrichtung 39 geführt, die die Lote auf die Mantelfläche des Nebenrohres fällt, die in einem angeschlossenen Speicher 40 abgespeichert werden. Die äußere Geometrie des Rohres wird in dem Bereich bestimmt, in dem die Durchdringungslinie, die schematisch mit 41 bezeichnet ist, verläuft.

Der Verlauf der Durchdringungslinie kann an dem Nebenrohr vorab bestimmt werden, da der von den Achsen des Haupt- und Nebenrohres eingeschlossene Winkel bekannt ist. Diese so bestimmte Linie wird dann in eine zur Achse des Nebenrohres senkrechte Ebene projiziert und entspricht der äußeren Kurve in der Ebene $E^{\bullet}$, die in den Figuren 2 bis 4 näher erläutert ist und die zur Bestimmung der Pendelpunkte dient.

Erfindungsgemäß wird die Durchdringungslinie mit erheblich größerer Genauigkeit bestimmt als dies bisher möglich war. Insbesondere entfällt ein nachträgliches Bearbeiten der Durchdringungslinien bei den üblichen Abweichungen vom kreisrunden Querschnitt und dgl. von Haupt- und Nebenrohren.

## Ansprüche

1. Verfahren zum Bestimmen der Berührungslinie bzw. Durchdringungslinie zwischen einem Hauptkörper und mindestens einem Nebenkörper für das Brennschneiden, wobei der Hauptkörper und der Nebenkörper sich berühren bzw. durchdringen,
dadurch gekennzeichnet,
daß der Hauptkörper raumfest angeordnet wird, außerhalb des Hauptkörpers eine raumfeste Ebene festgelegt und in der raumfesten Ebene ein Bezugspunkt für mindestens einen rotierenden Fahrstrahl gewählt wird, in Abhängigkeit des Drehwinkels des rotierenden Fahrstrahls die Länge der Lote auf einen die Berührungslinie enthaltenden, in sich geschlossenen Bereich des Hauptkörpers bestimmt werden, mit den Meßwerten die geometrische Gestalt des Körpers in dem in sich geschlossenen Bereich erfaßt und die Berührungslinie bzw.Durchdringungslinie in Abhängigkeit der Abmessungen des Nebenkörpers errechnet wird.

2 Verfahren nach Anspruch 1,
dadurch gekennzeichnet,
daß die Abmessungen des Nebenkörpers im Bereich der Berührungslinie von einer raumfesten Rotationsfläche aus gemessen werden, indem die Abstände der Meßstrahlen auf den Nebenkör per bestimmt werden, die durch die Achse der Rotationsfläche gehen.

3. Verfahren nach Anspruch 2,
dadurch gekennzeichnet,
daß die Drehachse der Rotationsfläche die Achse des Nebenkörpers unter dem Winkel schneidet, unter dem sich die Achsen des Haupt- und Nebenkörpers schneiden.

4. Verfahren nach Anspruch 1, 2 oder 3,
dadurch gekennzeichnet,
daß die Meßwerte mit einem in radialer Richtung auf dem Fahrstrahl verschiebbar angeordneten Meßzelle berührungslos bzw. mit einem mechanischen Taster aufgenommen werden.

5. Verfahren nach Anspruch 2 oder 3,
dadurch gekennzeichnet,
daß die Abstände mit einer bzw. einem auf der Mantellinie der Rotationsfläche verschiebbaren Meßzelle berührungslos bzw. mit einem mechanischen Taster aufgenommen werden.

6. Vorrichtung zum Durchführen des Verfahrens nach einem der Ansprüche 1 - 5,
dadurch gekennzeichnet,
daß die Vorrichtung eine Aufnahme (28,29) für die raumfeste Lagerung des Hauptkörpers bzw. Nebenkörpers zur Festlegung der Bezugsebene bzw. Rotationsfläche ein Kreuzsupport und einen in der Ebene des arretierbaren Kreuzsupportes um eine vorgegebene Achse auf einem drehbaren Arm (28) angeordnete Meßzelle (28") bzw. mechanischen Taster aufweist.

7. Vorrichtung nach Anspruch 6,
dadurch gekennzeichnet,
daß die Aufnahme eine unterhalb des Kreuzsupportes um drei Achsen verschwenkbare Dreh-Kippeinrichtung aufweist.

# Fig.1

# Fig.2

# Fig.3

EP 0 344 636 A2

# Fig. 3a

III →

Eo'

14

13

III →

# Fig. 3b

12

11

# Fig. 4a

IVb

Eo"

IVb

# Fig. 4b

# Fig. 4c

15

13

# Fig. 5

Fig.6